Europäisches Patentamt

European Patent Office

Office européen des brevets

(19)

(11) **EP 1 414 240 A1**

(12) **EUROPEAN PATENT APPLICATION**

(43) Date of publication:
   **28.04.2004 Bulletin 2004/18**

(51) Int Cl.7: **H04N 7/035**, H04N 7/085,
   H04N 7/088

(21) Application number: **02023914.1**

(22) Date of filing: **24.10.2002**

(84) Designated Contracting States:
   **AT BE BG CH CY CZ DE DK EE ES FI FR GB GR
   IE IT LI LU MC NL PT SE SK TR**
   Designated Extension States:
   **AL LT LV MK RO SI**

(71) Applicant: **Sony International (Europe) GmbH
   10785 Berlin (DE)**

(72) Inventor: **Golov, Gil,
   c/o Advanced Technology Center Stuttga
   70327 Stuttgart (DE)**

(74) Representative: **Müller - Hoffmann & Partner
   Patentanwälte,
   Innere Wiener Strasse 17
   81667 München (DE)**

(54) **Method and means for detecting video lines containing additional information**

(57) Subject-matter of the invention is a method and means for detecting additional information contained in the horizontal blanking area of a video signal by observing said information for a specific line (l) and for a plurality of consecutive frames (f), then comparing the variance of averaged sample levels for said specific video line along time against a threshold (TH) and supplying an indication on existence of additional information in said specific video line in dependence of said threshold. The invention overcomes misdetection problems for additional information in particular in those cases where no standard VBI data is presented.

Fig 3.

**Description**

The invention relates to a method and a set-up or means for detecting video lines containing VBI information, in particular to a method and a means for detecting VBI information contained in the horizontal blanking area of video signals.

The Vertical Blanking Information (VBI) is a binary information embedded in the horizontal blanking area of at least one video line and is used to deliver digital information onto video signals. The name vertical blanking information (VBI) might be misleading, but it stems from historical reasons. In practice. this information may appear on several or each of video lines during the horizontal blanking period. The basic principle of this delivery of additional digital information uses the fact that the total volume of such VBI information in modern TV applications cannot be fitted into a single video frame. Therefore, more than one frame is required in order to transmit the whole amount of required or desired data. Since the data is temporarily random for a specific video line, observing that information along time for a specific video line will show different values in each consecutive frame. Lines that do not contain VBI information will have a video blanking value that might have some deviations due to analogue noise influence but the average value of that line will stay around the blanking level. Data sheets for VBI handling according to the prior art suggest to detect the VBI information based on a special header embedded inside the VBI data or the video line synchronization signals, in particular for indicating that a VBI data packets starts.

The disadvantages or problems encountered with said prior art are while there is no such indication in some and/or different VBI standards it may become impossible to detect a video line as VBI carrying line.

It is an object of the present invention to find a possibility of detecting a VBI information contained in a video signal sequence also in a case that no standard VBI information is present. In particular, the invention is aimed at not to rely on a special header embedded inside of VBI data.

For solving the problem outlined above, the invention provides for a method of detecting VBI information contained in the horizontal blanking area of a video signal by observing said information for a specific line and for a plurality of consecutive frames, comparing the variance of averaged pixel levels for said specific video line along time against a threshold and supplying an indication on existence of VBI information in said specific video line in dependence of said threshold.

More specifically, and in accordance with the presently known best mode for realizing the invention, the method of the invention is characterized by the following steps:

(a) calculating the average value

$$avg(l,f) = \frac{\sum\limits_{i=1}^{n} X(i)}{n} \qquad (1)$$

of n samples of values of video pixel levels X(i) in the area that VBI information may be appearing in said specific video line l and for consecutive frames f, wherein X(i) defines the value of a video sample i in the VBI area of said video line l in a specific frame;

(b) calculating the variance

$$var(l,f) = \frac{(q-m+1) \cdot \sum\limits_{f=m}^{q} avg(l,f)^2 - (\sum\limits_{f=m}^{q} avg(l,f))^2}{(q-m+1) \cdot (q-m)} \qquad (2)$$

among average pixel level values avg(l,m) to avg(l,q) resulting from step (a) for the same video line l of a defined plurality of frames $m \leq f \leq q$;

(c) comparing the variance value var(l,f) for said specific video line l against said threshold and notifying on existence of VBI information in this specific video line l in case that the variance value var(l,f) is equal or greater than said threshold.

Said threshold may be a constant value, however preferably dynamically adjustable or changeable according to specific video measurements which in particular take into account the noise level.

Further, and in accordance with the invention, a set-up, installation or means in a video signal processing device for detecting VBI information contained in the horizontal blanking areas of video signals is charcterized by calculating means for calculating the average pixel value in a VBI area of a specific line of a video input signal for a plurality of consecutive frames and for defining the variance of said averaged pixel level values of the same line, and a means for comparing said calculated variance value against the threshold and for outputting of a VBI indication if said calculated variance value is equal or larger than said threshold.

The basic principle of the invention accomodates the fact that the total volume of VBI information in modern TV applications cannot be fitted into a single video frame. Therefore, more than one frame is required in order to transmit the whole amount of required data. Since that data is temporarily random for a specific video line, observing that information a longer time for a specific video line will show different values in each consecutive frame. Lines that do not contain VBI information will have a video blanking value that might have some deviations due to analogue noise influence but the average value of that line will stay around the blanking level.

All the calculations defined above refer to the area in the horizontal blanking in which a VBI information may be presented. In some cases, the VBI information may occupy the complete horizontal period, although this is not mandatory.

The major advantage of the invention is that misdetection problems discussed above and attributed to the state of the art are avoided in particular while a nonstandard VBI information is present.

The invention and advantageous features thereof are illucidated more closely and in detail with reference to the accompanying drawings in which

Fig. 1    shows the channel scheme of a video frame comprising in the horizontal blanking area of each line or at least a plurality of lines a VBI information area;

Fig. 2    shows a comparison process for generating a VBI indication according to the invention;

Fig. 3    visualizes a block picture flow chart for processing of a video signal in accordance with the invention for securely detecting the presence or nonpresence of VBI information; and

Fig. 4    is a flow chart of a processing routine for determining of existance of VBI information in a video signal.

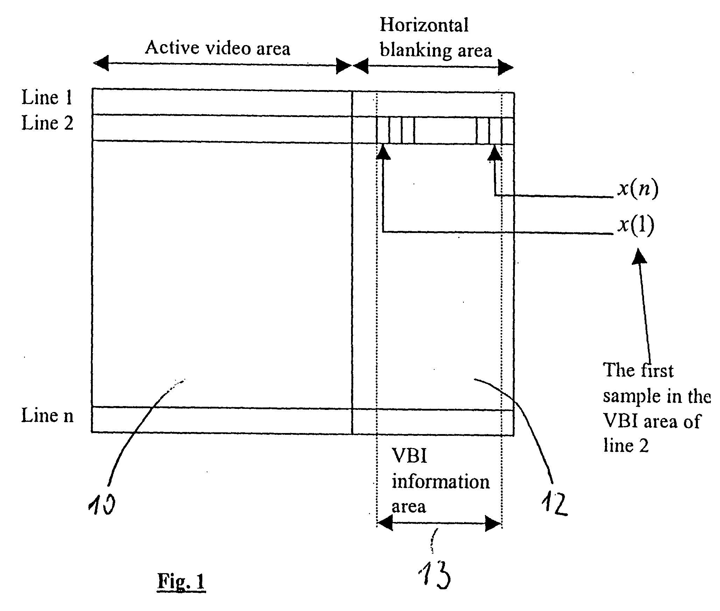

Fig. 1 visualizes the general structure of one frame of a video signal sequence which is known to those skilled in the art. One video frame is comprised of n lines which are marked as "Line 1", "Line 2" ... "Line n". An active video area in each frame is generally marked by reference number 10 and a horizontal blanking area of each of said lines is generally marked by reference 12. As known to those skilled in the art, the horizontal blanking area 12 of each line comprises the blanking pulse, some reference level information etc., but also in an area of the backward or black shoulder, a VBI information area 13 comprising not necessarily constant sequences of video samples X(1), X(2) ... X(n) which are shown in Fig. 1 for "Line 2" only. In the VBI information area, there may be or may not be some header or identification information depending on the specific video standard. As far as the invention is concerned, any specific header at the beginning or embedded inside the VBI data is not required for detecting whether or not VBI information is contained in a specific line or a plurality of specific lines.

According to the invention, the VBI indication or detection is based more or less on three steps:

Step a: The average video level values in the signal area 12 in which VBI information may appear during the horizontal blanking is calculated. This can be done on the analogue and/or the digital level according to the following equation:

$$avg(l,f) = \frac{\sum_{i=1}^{n} X(i)}{n} \qquad (1)$$

This equation (1) contains the average of the sampled values of line l for a frame f while n defines the number of samples in the VBI area and X(i) is the value of the video sample i in the VBI area of frame f, line l.

(b): The variance among avg(1,m) ... avg(1,q) is calculated according to the following equation (2)

$$var(l,f) = \frac{(q-m+1) \cdot \sum_{f=m}^{q} avg(l,f)^2 - (\sum_{f=m}^{q} avg(l,f))^2}{(q-m+1) \cdot (q-m)} \qquad (2)$$

Equation (2) defines the variance of the average values of the same line l in frames m to q. The larger the distance between m and q, i.e. the more frames are involved, the more accurate is the result.

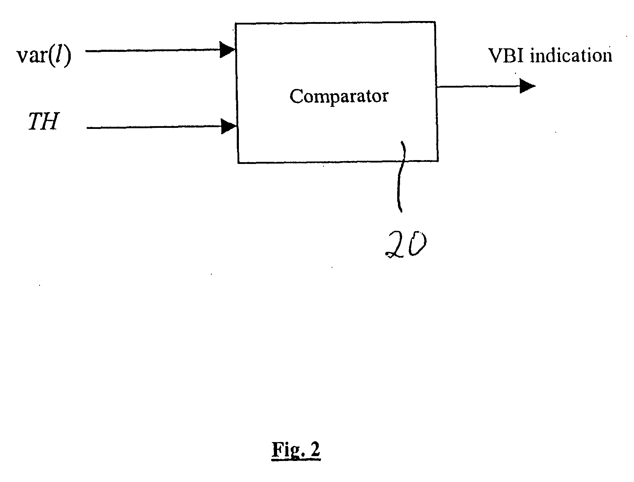

Step (c): For a specific video line, the variance var(l,f) against a threshold TH is compared in a comparator means 20 (see Fig. 2). In the case, that var(l,f) is greater than the threshold TH, this is an indication of the existence of VBI information in this specific video line l. The value of the threshold TH may be constant or may be preferably dynamically changed based on video measurements, in particular on the noise level.

As to the above mention that the calculation process can be performed on the analogue or digital level, the following remark may be useful:

In video systems, sometimes the video signal is converted from digital to analogue, e.g., currently a standard DVD player is connected to a TV set using an analogue connection. One common application in video systems is noise measurement on the horizontal blanking. In order to do so, one has to make sure that on the measured line there is no VBI information. The invention supplies this information.

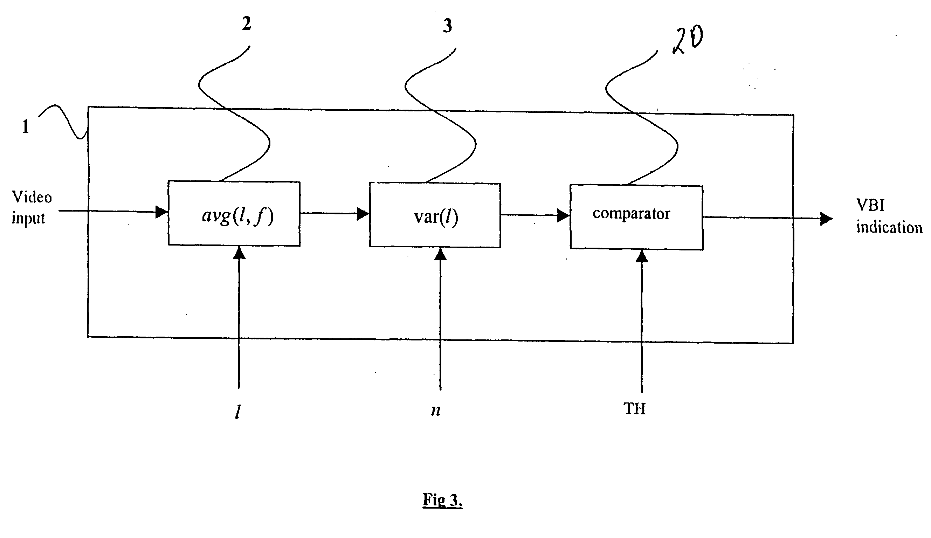

The block picture flow chart of Fig. 3 visualizes the method of detecting video lines containing VBI information according to the invention: The respective circuit or comparator component 20 may be realized in hardware or by a software routine. A video input signal is examined in the area where VBI information may be present and the average pixel level of a specific line l of frame f is calculated according to the above equation (1) in block 2. Typically, but in no way limiting, the number of frames to be examined for the VBI determination is "5". Then temporarily, a variance var(l,f) of a plurality of different values $m \leq f \leq q$ is claculated according to equation (2) in block 3. The result of the variance calculation is then supplied to comparator component 20 and is compared against a threshold TH to determine whether VBI information is present on said specific line l.

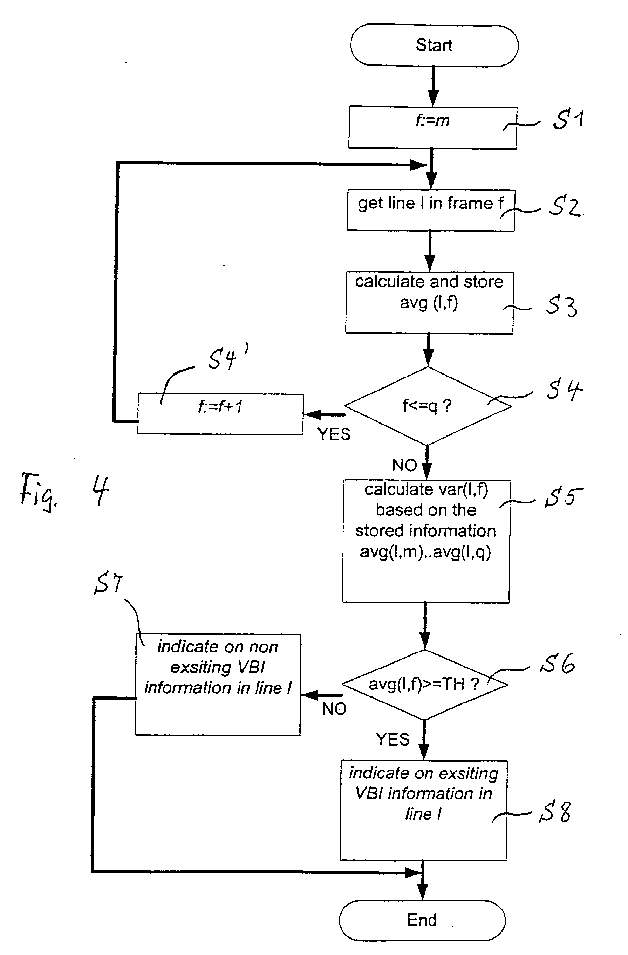

Fig. 4 is a flow chart of the program routine for deciding on existance or non-existance of VBI information in the horizontal blanking area of a specific line of a video signal for a plurality of consecutive frames in accordance with the invention. After start of the program, in step S1 frame f: = m is selected for the beginning of the VBI information test. Then, in step S2, line l of frame f is identified and in step S3 the average value of samples of video levels is calculated in accordance of equation (1) and the average value is stored. Then, in step S4 it is decided whether the number of frames from the beginning is still smaller or equal $f \leq q$ whereby the number (q - m) may be in the range of "2" to "10" and preferably "3" to "6" with a typical value of "5". If f is still smaller than q the frame number is incremented by "+1" in step S4' and program steps S2, S3 are repeated. If f has reached the value of q, in step S5 the variance among average pixel level values is calculated in accordance with equation (2) and the result is stored. Then, in step S6 the variance value var(1,f) is compared against a preset or dynamically adjustable threshold value TH. If the variance value is smaller than the threshold value TH, in step S7 an indication on non-existance of VBI information in the selected line l is issued. On the other hand, if the variance value is equal or larger than the threshold value TH, in step S8 an indication is issued on the existance of VBI information in said specific line l of the video signal.

The invention opens the possibility of detecting VBI information contained in a video signal sequence without the requirement for a specific standard of VBI information and without the requirement of a special header at the beginning or embedded inside of VBI data.

**Claims**

1. A method for detecting VBI information contained in the horizontal blanking area of a video signal by observing said information for a specific line and for a plurality of consecutive frames, comparing the variance of averaged sample levels for said specific video line along time against a threshold and supplying an indication on existence of VBI information in said specific video line in dependence of said threshold.

2. The method of claim 1, **characterized by** the following steps:

  (a) calculating the average value

$$\text{avg(l,f)} = \frac{\sum\limits_{i=1}^{n} X(i)}{n} \tag{1}$$

of n samples of values of video levels X(i) in the area that VBI information may be appearing in said specific video line I and for consecutive frames f, wherein X(i) defines the value of video sample i in the VBI area of video line I in a specific frame;
(b) calculating the variance

$$\text{var(l,f)} = \frac{(q-m+1) \cdot \sum\limits_{f=m}^{q} \text{avg(l,f)}^2 - (\sum\limits_{f=m}^{q} \text{avg(l,f)})^2}{(q-m+1)\cdot(q-m)} \tag{2}$$

among average pixel level values avg(l,m) to avg(l,q) resulting from step (a) for the same video line I of a defined plurality of frames $m \leq f \leq q$;
(c) comparing the variance value var(l,f) for said specific video line (I) resulting from step (b) against said threshold (TH) and notifying on existence of VBI information in this specific video line I in case the variance value var(l,f) is equal or greater than said threshold (TH).

3.  The method of claim 2, wherein said threshold (TH) is constant.

4.  The method of claim 2, wherein said threshold (TH) is dynamically adjustable.

5.  The method of claim 4, wherein the dynamically adjusting of said threshold is based on measurement of specific video signal level parameters.

6.  The method of claim 5, wherein the dynamically adjusting of said threshold is based on noise level measurements.

7.  A set-up and means in a video signal processing device for detecting VBI information contained in the horizontal blanking areas of video signals, **characterized by** calculating means (2, 3) for calculating the average sample level in a VBI area of a specific line (I) of a video input signal for a plurality of consecutive frames (f) and for defining the variance of said averaged sample level values of the same line, and a means for comparing said calculated variance value against a threshold (TH) and for outputting of a VBI indication if said calculated variance value is equal or larger than said threshold.

Fig. 1

var($l$) $\longrightarrow$

$TH$ $\longrightarrow$

Comparator

$\longrightarrow$ VBI indication

20

**Fig. 2**

EP 1 414 240 A1

EP 1 414 240 A1

Video input → $avg(l, f)$ → $var(l)$ → comparator → VBI indication

1  2  3  20

$l$  $n$  TH

**Fig 3.**

Start

f:=m — *S1*

get line l in frame f — *S2*

calculate and store avg (l,f) — *S3*

f<=q ? — *S4*

f:=f+1 — *S4'*

YES

NO

calculate var(l,f) based on the stored information avg(l,m)..avg(l,q) — *S5*

*Fig. 4*

indicate on non exsiting VBI information in line l — *S7*

avg(l,f)>=TH ? — *S6*

NO

YES

indicate on exsiting VBI information in line l — *S8*

End

**European Patent Office**

**EUROPEAN SEARCH REPORT**

Application Number

EP 02 02 3914

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 001 568 A (MCPHERSON JAMES O ET AL) 19 March 1991 (1991-03-19) * column 31, line 4 - line 33; figures 20,21B * --- | 1,7 | H04N7/035 H04N7/085 H04N7/088 |
| A | WO 01 67391 A (KONINKL PHILIPS ELECTRONICS NV) 13 September 2001 (2001-09-13) * column 2, line 1 - column 3, line 19 * --- | 1,7 | |
| A | WO 93 18614 A (THOMSON CONSUMER ELECTRONICS) 16 September 1993 (1993-09-16) * the whole document * ----- | 1,7 | |

TECHNICAL FIELDS SEARCHED (Int.Cl.7)

H04N

The present search report has been drawn up for all claims

| Place of search | Date of completion of the search | Examiner |
|---|---|---|
| THE HAGUE | 6 March 2003 | Beaudoin, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 02 3914

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2003

| Patent document cited in search report | Publication date | Patent family member(s) | | Publication date |
|---|---|---|---|---|
| US 5001568 A | 19-03-1991 | US | 4746991 A | 24-05-1988 |
| | | AT | 20995 T | 15-08-1986 |
| | | AT | 31991 T | 15-01-1988 |
| | | AT | 37112 T | 15-09-1988 |
| | | AT | 29638 T | 15-09-1987 |
| | | AT | 28958 T | 15-08-1987 |
| | | AT | 28713 T | 15-08-1987 |
| | | DE | 3272153 D1 | 28-08-1986 |
| | | DE | 3276896 D1 | 03-09-1987 |
| | | DE | 3276995 D1 | 17-09-1987 |
| | | DE | 3277281 D1 | 15-10-1987 |
| | | DE | 3277997 D1 | 18-02-1988 |
| | | DE | 3279010 D1 | 13-10-1988 |
| | | EP | 0083686 A1 | 20-07-1983 |
| | | EP | 0113425 A1 | 18-07-1984 |
| | | EP | 0116135 A1 | 22-08-1984 |
| | | EP | 0113426 A1 | 18-07-1984 |
| | | EP | 0117908 A1 | 12-09-1984 |
| | | EP | 0117909 A1 | 12-09-1984 |
| | | EP | 0117910 A1 | 12-09-1984 |
| | | EP | 0152535 A2 | 28-08-1985 |
| | | EP | 0309639 A2 | 05-04-1989 |
| | | HK | 15491 A | 15-03-1991 |
| | | HK | 15691 A | 15-03-1991 |
| | | HK | 16091 A | 15-03-1991 |
| | | HK | 20891 A | 28-03-1991 |
| | | HK | 29991 A | 26-04-1991 |
| | | HK | 30091 A | 26-04-1991 |
| | | JP | 2009403 C | 02-02-1996 |
| | | JP | 7011548 B | 08-02-1995 |
| | | JP | 58120173 A | 16-07-1983 |
| | | JP | 2839058 B2 | 16-12-1998 |
| | | JP | 7078423 A | 20-03-1995 |
| | | KR | 8802665 B1 | 17-12-1988 |
| | | KR | 8802651 B1 | 08-12-1988 |
| | | KR | 8802653 B1 | 08-12-1988 |
| | | KR | 8802666 B1 | 17-12-1988 |
| | | KR | 8802667 B1 | 17-12-1988 |
| | | SG | 18391 G | 14-02-1992 |
| | | SG | 18491 G | 14-02-1992 |
| | | US | 4455634 A | 19-06-1984 |
| | | US | 5126990 A | 30-06-1992 |
| | | US | 4682246 A | 21-07-1987 |
| | | US | 4598324 A | 01-07-1986 |
| | | US | 4524444 A | 18-06-1985 |
| | | US | 4764915 A | 16-08-1988 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 02 02 3914

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2003

| Patent document cited in search report | | Publication date | Patent family member(s) | | Publication date |
|---|---|---|---|---|---|
| US 5001568 | A | | US 4755884 A | | 05-07-1988 |
| WO 0167391 | A | 13-09-2001 | US 6359658 B1 | | 19-03-2002 |
| | | | CN 1372771 T | | 02-10-2002 |
| | | | WO 0167391 A2 | | 13-09-2001 |
| | | | EP 1198785 A2 | | 24-04-2002 |
| WO 9318614 | A | 16-09-1993 | US 5371545 A | | 06-12-1994 |
| | | | CA 2131712 A1 | | 16-09-1993 |
| | | | DE 69326546 D1 | | 28-10-1999 |
| | | | DE 69326546 T2 | | 05-01-2000 |
| | | | EP 0630546 A1 | | 28-12-1994 |
| | | | JP 3289106 B2 | | 04-06-2002 |
| | | | JP 7504549 T | | 18-05-1995 |
| | | | MX 9301327 A1 | | 01-10-1993 |
| | | | SG 64915 A1 | | 25-05-1999 |
| | | | WO 9318614 A1 | | 16-09-1993 |